# EUROPÄISCHE PATENTSCHRIFT

(11) **EP 1 080 961 B1**
(45) Veröffentlichungstag und Bekanntmachung des Hinweises auf die Patenterteilung: **28.09.2005**
(21) Anmeldenummer: 00115197.6
(22) Anmeldetag: 13.07.2000
(51) Int. Cl.: B60J 7/02, B60R 9/04, B62D 25/06

(54) **Dach für ein Kraftfahrzeug**
Roof for a vehicle
Toit pour véhicule

(30) Priorität: 03.09.1999 DE 19941986
(43) Veröffentlichungstag der Anmeldung: 07.03.2001
(73) Patentinhaber: Dr.Ing. h.c.F. Porsche Aktiengesellschaft, 70435 Stuttgart (DE)
(72) Erfinder: Thomas, Peter, 75181 Pforzheim (DE)

(56) Entgegenhaltungen:
- EP-A- 0 366 045
- DE-A- 2 936 052
- DE-A- 2 950 643
- DE-A- 3 151 405
- FR-A- 2 672 260
- GB-A- 1 411 305
- US-A- 5 197 779

## Beschreibung

Die Erfindung bezieht sich auf ein Dach für ein Kraftfahrzeug nach den Oberbegriffen der Ansprüche 1 oder 2.

Aus der gattungsgemäßen DE 196 13 761 C1 ist ein öffnungsfähiges Fahrzeugdach mit wenigstens einem beweglichen Dachteil bekannt, das an seitlich einer Dachöffnung angeordneten Führungsschienen bewegbar geführt ist. Die Führungsschienen selbst bilden einen Teil eines Rahmens, der von oben in die Dachöffnung einsetzbar ist und der über Flansche mit seitlichen Dachrahmen verbindbar ist. Die Führungsschienen bzw. der diese tragende Rahmen weist einen nach oben gerichteten Steg auf, an dem ein Außenrahmen befestigbar ist, der einen Spalt zwischen den Dachholmen und den Dachteilen überdeckt. Des weiteren ist aus der DE 43 44 604 C1 ein Fahrzeugdach mit einer Dachreling bekannt, die mit einer Abdeckleiste verbunden am Dachseitenholm über Schrauben befestigbar ist. Die DE-3151405 offenbart ein weiteres Fahrzeugdach mit Dachreling.

Aufgabe der Erfindung ist es, ein festes durchgehendes Dachelement bzw. ein Dachmodul für ein Kraftfahrzeug mit mindestens einem bewegbaren Dachabschnitt zu schaffen, das in eine Dachöffnung des Fahrzeugs in einfacher Weise zwischen Dachseitenholmen der Aufbaustruktur einsetzbar ist und über Halteelemente festgesetzt wird.

Diese Aufgabe wird erfindungsgemäß durch die Merkmale des Anspruchs 1 oder 2 gelöst. Weitere vorteilhafte Merkmale beinhalten die Unteransprüche.

Die mit der Erfindung hauptsächlich erzielten Vorteile bestehen darin, dass ein festes durchgehendes Fahrzeugdach bzw. ein Dachmodul mit mindestens einem längsverschiebbaren Dachabschnitt in eine Dachöffnung eines Fahrzeugs zwischen Dachseitenholmen einsetzbar und an jeder Seite über Halteschienen mittels Schrauben an diesen Dachseitenholmen festsetzbar ist. Die Halteschiene ist als profilierte Trägerschiene, u.a. zur Festlegung eines Dachtransportsystems auf dem Dach ausgelegt. Somit erfüllt diese Halteschiene neben der Haltefunktion bzw. Befestigungsfunktion für das Dachmodul noch die Funktion zur Aufnahme des Dachtransportsystems. Hierzu sind die Führungsschienen des Daches bzw. des Dachmoduls jeweils innenseitig des eine Dachöffnung begrenzenden Dachseitenholms angeordnet und mit diesem verbunden. In einer zwischen dem Dachseitenholm und der Führungsschiene längsverlaufenden Rinne ist die Halteschiene für das Dachtransportsystem angeordnet.

Zur einfachen Aufnahme und Befestigung des Dachmoduls in der Aufbaustruktur sowie der Halteschiene weist die Führungsschiene und der Rahmen für das Dach jeweils einen etwa horizontal zur Außenseite des Fahrzeugs hin wegragenden Steg auf, der oberhalb einer zur Innenseite des Fahrzeugs ragenden Abstellung des Dachseitenholms angeordnet ist. Die Halteschiene sowie die Führungsschiene bzw. der Rahmen werden mit dem Dachseitenholm über Befestigungsschrauben verbunden. Eine Abstützung der Führungsschiene und der Halteschiene erfolgt an der Abstellung des Dachseitenholms.

Die Halteschiene kann, ohne dass das Dachmodul von dem Dachseitenholm gelöst wird, ausgewechselt werden. Hierzu ist die Halteschiene mit Führungsschiene oder Rahmen teilweise über die Befestigungsschrauben samt dem Dach und teilweise ist das Dach nur über separate Befestigungsschrauben mit dem Dachseitenholm verbunden.

Nach einer weiteren besonderen Ausführung der Erfindung kann die Führungsschiene auch einteilig mit der Halteschiene eines Dachtransportsystems ausgeführt sein, wobei eine Verbindung des Dachmoduls mit den Dachseitenholmen dann unmittelbar über die Befestigungsschrauben erfolgt. Hierdurch wird eine Einteiligkeit von Halteschiene und Führungsschiene erzielt, was eine Montage und Demontage des Dachmoduls vereinfacht.

Zur Fixierung und Ausrichtung der Halteschiene in Längsrichtung weist die Halteschiene an der Unterseite im Bereich eines Stegs längsverlaufende beabstandete Rippen auf, die innenseitig von längsverlaufenden oberseitigen Rippen am Steg der Führungsschiene angeordnet sind.

Um eine Dichtigkeit an den Schraubpunkten der Halteschienen zu erzielen, weist diese im Befestigungsbereich über die Schrauben jeweils ein Unterlegteil mit einem die Schrauben umgebenden Dichtelement auf.

Eine äußere Dichtung der Halteschiene erfolgt über Dichtleisten, die in beiden Schenkeln der Halteschiene angeordnet sind und sich einerseits am Dachseitenholm und andererseits an der Führungsschiene anlehnt.

Dadurch, dass das Dachmodul mit beweglichen Dachabschnitten über die den Steg der Führungsschiene übergreifenden Halteschiene am Dachseitenholm des Fahrzeugdachs zumindest über die Länge der Dachöffnung mittels der Schrauben festsetzbar ist, wird eine stabile Befestigung an der Dachaufbaustruktur erzielt, so dass im Zusammenhang mit der Führungsschiene eine erhöhte Steifigkeit für den Dachrahmen erzielt wird. Entsprechendes gilt auch für das mit dem Rahmen verbundene feste Dachelement, welches transparent oder undurchsichtig aus Blech oder Kunststoff bestehen kann.

Ein Ausführungsbeispiel der Erfindung ist in den Zeichnungen dargestellt und wird nachfolgend näher beschrieben.

Es zeigen
- Fig. 1: einen Querschnitt durch einen Dachseitenholm mit Führungsschiene, Dachabschnitt und Halteschiene mit durchgehender Befestigungsschraube,
- Fig. 2: einen Querschnitt durch einen Dachseitenholm mit Führungsschiene, bzw. Rahmen , Dachabschnitt und Halteschiene mit teilweise durchgehenden Befestigungsschrauben und
- Fig. 3: einen Querschnitt durch einen Dachseitenholm mit Führungsschiene, Dachabschnitt und Halteschiene in einem Bereich zwischen den Befestigungsschrauben.

Bei einem Dach 1 für ein Kraftfahrzeug, insbesondere für ein funktionsfähiges Dachmodul mit mindestens einem längsbewegbaren Dachabschnitt D2, ist innenseitig eines Dachseitenholmes 3 eine Führungsschiene 4 für den oder die bewegbaren Dachabschnitte D2 und folgende vorgesehen. Bei einem durchgehenden Dachelement ist dieses in einem Rahmen 4a gehalten, welches mit den Dachseitenholmen 3 verbunden wird.

Die Führungsschiene 4 und der Rahmen 4a weisen jeweils einen zur Fahrzeugaußenseite hin wegragenden, etwa horizontal ausgerichteten Steg 5 auf, der oberhalb einer zur Fahrzeuginnenseite hin ragenden Abstellung 3a des Dachseitenholmes 3 angeordnet ist. Zwischen dem Dachseitenholm 3 und der Führungsschiene 4 bzw. dem Rahmen 4a verbleibt eine längsverlaufende vertiefte Rinne 6, in welcher eine Halteschiene 7 für ein Dachtransportsystem angeordnet ist. Die Halteschiene 7 überragt nur unwesentlich die Dachkontur.

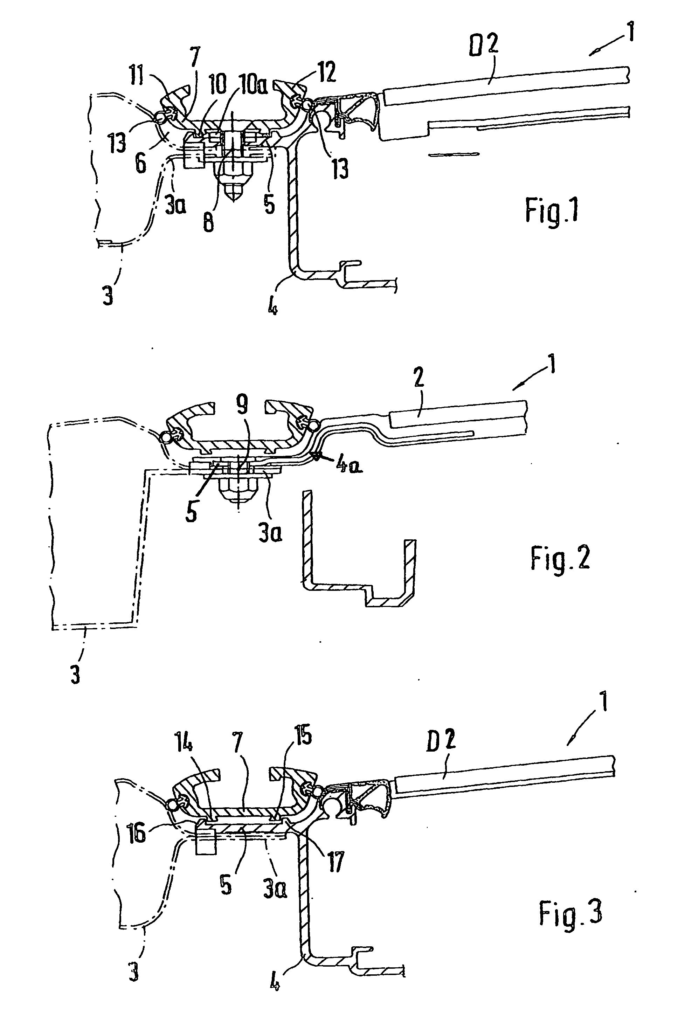

An der Abstellung 3a des Dachseitenholmes 3 ist der Steg 5 der Führungsschiene 4 (Fig. 1) bzw. des Rahmens 4a sowie die Halteschiene 7 über Befestigungsschrauben 8 verbunden.

Durch die Halteschiene 7 wird das Dach 1 bzw. das Dachmodul mit den Dachabschnitten 2 und D2 verstärkend an der Führungsschiene 4 gehalten, da diese übergriffen und mit dem Dachseitenholm 3 verbunden wird.

Die Führungsschiene 4 bzw. der Rahmen 4a des Dachmoduls wird teilweise mit der Halteschiene 7 über die Schrauben 8 am Dachseitenholm 3 befestigt (Fig. 1) und die Führungsschiene 4 wird nur teilweise über Schrauben 9 direkt am Dachseitenholm 3 festgelegt (Fig. 2). Die Befestigungen über die Schrauben 8 und 9 können beispielsweise abwechselnd erfolgen. Zwischen den Schrauben 8, 9 kann die Halteschiene 7 in geringem Maß beabstandet zum Steg 5 der Führungsschiene 4 angeordnet sein.

Zur Abdichtung im Befestigungsbereich der Schraube 8 kann ein Unterlegeteil 10 zwischen der Halteschiene 7 und dem Steg 5 der Führungsschiene 4 vorgesehen sein, welches eine die Schraube 8 umgebende Dichtung aufweist und die sich einerseits am Steg 5 und andererseits an der Halteschiene 7 dichtend abstützt. Des weiteren ist an der Halteschiene 7, insbesondere an seinen Schenkeln 11, 12, jeweils eine Dichtleiste 13 gehalten, die sich am Dachseitenholm 3 sowie an der Führungsschiene 4 anlegt.

Die Halteschiene 7 ist beispielsweise c-profilförmig ausgebildet und weist unterseitig längsverlaufende beabstandete Rippen 14, 15 auf, die innerhalb von längsverlaufenden außenseitigen Rippen 16, 17 am Steg 5 der Führungsschiene 7 angeformt sind.

Die Führungsschiene 4 kann auch derart ausgeführt sein, dass die Halteschiene 7 Teil des Stegs 5 ist und diese Führungsschiene 4 einteilig mit der Halteschiene 7 ausgebildet ist.

## Patentansprüche

1. Dach für ein Kraftfahrzeug mit einem festen durchgehenden Dachelement (2), und mindestens einem bewegbaren Dachabschnitt (D2), der auf einer Führungsschiene (4) verschiebbar gehalten ist und die Führungsschiene (4) und ein Rahmen (4a) mit einem Dachseitenholm (3) verbunden und gegenüber diesem abgedichtet angeordnet ist und die Führungsschiene (4) des Dachabschnitts (D2) und der Rahmen (4a) des festen Dachelements (2) jeweils innenseitig des Dachseitenholms (3) angeordnet und mit diesen verbunden ist und in einem zwischen dem Dachseitenholm (3) und der Führungsschiene (4) und dem Rahmen (4a) eine längsverlaufende tiefergelegenen Rinne (6) für eine Halteschiene (7) eines Dachtransportsystems angeordnet ist, **dadurch gekennzeichnet, dass** die Führungsschiene (4) und der Rahmen (4a) einen etwa horizontal zur Außenseite des Fahrzeugs hin wegragenden Steg (5) aufweisen, der oberhalb einer zur Innenseite des Fahrzeugs hin ragenden Abstellung (3a) des Dachseitenholms (3) angeordnet ist und dass mit dem Steg (5) der Führungsschiene (4) oder des Rahmens (4a) und der Abstellung (3a) die Halteschiene (7) des Dachtransportsystems mittels Befestigungsschrauben (8) verbindbar ist und dass der Steg (5) des Rahmens (4a) oder der Führungsschiene (4) unmittelbar über separate Befestigungsschrauben (9) mit dem Dachseitenholm (3) verbindbar ist und dass die Halteschiene (7) des Dachtransportsystems als versteifendes Befestigungselement für das Dach (1) verwendet wird.

2. Dach für ein Kraftfahrzeug mit mindestens einem bewegbaren Dachabschnitt (D2), der auf einer Führungsschiene (4) verschiebbar gehalten ist und die Führungsschiene (4) mit einem Dachseitenholm (3) verbunden und gegenüber diesem abgedichtet angeordnet ist, **dadurch gekennzeichnet, dass** die Führungsschiene (4) einteilig mit der Halteschiene (7) eines Dachtransportsystems ausgebildet ist und eine Verbindung des Daches (1) mit dem Dachseitenholm (3) unmittelbar über Befestigungsschrauben (8) erfolgt.

3. Dach nach einem oder mehreren der vorhergehenden Ansprüche, **dadurch gekennzeichnet, dass** die Halteschiene (7) c-profilförmig ausgeführt ist und unterseitig eines Stegs längsverlaufende beabstandete Rippen (14, 15) aufweist, die innenseitig von längsverlaufenden oberseitigen Rippen (16, 17) am Steg (5) der Führungsschiene (4) angeordnet sind.

4. Dach nach einem oder mehreren der vorhergehenden Ansprüche, **dadurch gekennzeichnet, dass** im Befestigungsbereich der Halteschiene (7) über die Schrauben (8) jeweils ein Unterlegteil (10) mit einem die Schraube (8) umgebenden Dichtelement (10a) angeordnet ist.

5. Dach nach einem oder mehreren der vorhergehenden Ansprüche, **dadurch gekennzeichnet, dass** die Halteschiene (7) in beiden Schenkeln (11, 12) eine Dichtleiste (13) aufnimmt, die sich am Dachseitenholm (3) sowie an der Führungsschiene (4) dichtend anlegt.

## Claims

1. A roof for a motor vehicle, comprising a fixed, continuous roof member (2) and at least one movable roof portion (D2) which is displaceably held on a guide rail (4), and the guide rail (4) and a frame (4a) are connected to a roof side member (3) and are sealed in relation thereto, and the guide rail (4) of the roof portion (D2) and the frame (4a) of the fixed roof member (2) are each arranged on the inside of the roof side member (3) and are connected thereto, and a longitudinally extending, lower-lying channel (6) for a holding rail (7) of a roof transportation system is arranged between the roof side member (3) and the guide rail (4) and the frame (4a), **characterised in that** the guide rail (4) and the frame (4a) have a web (5) which projects substantially horizontally towards the outside of the vehicle and is arranged above a shoulder (3a) of the roof side member (3), said shoulder (3a) projecting towards the inside of the vehicle, and **in that** the holding rail (7) of the roof transportation system is connectable by means of fixing bolts (8) to the web (5) of the guide rail (4) or frame (4a) and the shoulder (3a), and **in that** the web (5) of the frame (4a) or guide rail (4) is directly connectable to the roof side member (3) by separate fixing bolts (9), and **in that** the holding rail (7) of the roof transportation system is used as a reinforcing fixing member for the roof (1).

2. A roof for a motor vehicle, comprising at least one movable roof portion (D2) which is displaceably held on a guide rail (4), and the guide rail (4) is connected to a roof side member (3) and sealed in relation thereto, **characterised in that** the guide rail (4) is formed in one piece with the holding rail (7) of a roof transportation system, and the roof (1) is connected directly to the roof side member (3) by fixing bolts (8).

3. A roof according to one or more of the preceding claims, **characterised in that** the holding rail (7) is c-shaped in cross-section and has spaced ribs (14, 15) which extend longitudinally on the underside of a web and are arranged on the inside of longitudinally extending, upper ribs (16, 17) on the web (5) of the guide rail (4).

4. A roof according to one or more of the preceding claims, **characterised in that** a washer (10) with a sealing element (10a) surrounding the bolt (8) is arranged in the fixing region of the holding rail (7) via the bolts (8).

5. A roof according to one or more of the preceding claims, **characterised in that** the two arms (11, 12) of the holding rail (7) each receive a sealing strip (13) which rests against the roof side member (3) and the guide rail (4) so as to form a seal.

## Revendications

1. Toit de véhicule automobile comportant un élément de toit (2) continu et fixe et au moins une section de toit (D2) déplaçable qui est maintenue coulissante sur un rail de guidage (4), et le rail de guidage (4) ainsi qu'un cadre (4a) sont reliés à un longeron latéral de toit (3) et disposés de manière étanche par rapport à celui-ci, et le rail de guidage (4) de la section de toit (D2) ainsi que le cadre (4a) de l'élément de toit (2) fixe sont disposés chacun sur le côté intérieur du longeron latéral (3) du toit et reliés à celui-ci, et une gouttière (6) s'étendant longitudinalement et située plus en profondeur est disposée entre le longeron latéral (3) du toit et le rail de guidage (4) et le cadre (4a), gouttière destinée à un rail de retenue (7) d'un système de transport de toit, **caractérisé en ce que** le rail de guidage (4) et le cadre (4a) comportent une patte (5) s'étendant approximativement horizontalement vers le côté extérieur du véhicule et qui est disposée au-dessus d'un palier (3a), s'étendant vers le côté intérieur du véhicule, du longeron latéral (3) du toit, et **en ce que** le rail de retenue (7) du système de transport de toit peut être relié, par des vis de fixation (8), à la patte (5) du rail de guidage (4) ou du cadre (4a) et au palier (3a), et **en ce que** la patte (5) du cadre (4a) ou du rail de guidage (4) peut être reliée directement au longeron latéral (3) du toit, par des vis de fixation (9) séparées, et **en ce que** le rail de retenue (7) du système de transport de toit est utilisé comme élément de fixation raidisseur pour le toit (1).

2. Toit de véhicule automobile comportant au moins une section de toit (D2) déplaçable qui est maintenue coulissante sur un rail de guidage (4), et le rail de guidage (4) est relié à un longeron latéral (3) du toit et est disposé de manière étanche par rapport à celui-ci, **caractérisé en ce que** le rail de guidage (4) est réalisé d'une seule pièce avec le rail de retenue (7) d'un système de transport de toit et une liaison du toit (1) au longeron latéral (3) du toit s'effectue directement par des vis de fixation (8).

3. Toit selon une ou plusieurs des revendications précédentes, **caractérisé en ce que** le rail de retenue (7) présente la forme d'un profilé en C et comporte, sur la face inférieure d'une patte, des nervures (14, 15) espacées s'étendant longitudinalement qui sont disposées sur la face intérieure de nervures (16, 17) côté supérieur, s'étendant longitudinalement, sur la patte (5) du rail de guidage (4).

4. Toit selon une ou plusieurs des revendications précédentes, **caractérisé en ce que** dans la zone de fixation du rail de retenue (7) au-dessus de chacune des vis (8) est disposée une rondelle (10) avec un élément d'étanchéité (10a) entourant la vis (8).

5. Toit selon une ou plusieurs des revendications précédentes, **caractérisé en ce que** le rail de retenue (7) reçoit, dans ses deux ailes (11, 12), une baguette d'étanchéité (13) qui s'applique de manière étanche contre le longeron latéral (3) du toit ainsi que contre le rail de guidage (4).
